# EUROPÄISCHE PATENTSCHRIFT

(11) **EP 2 288 450 B1**
(45) Veröffentlichungstag und Bekanntmachung des Hinweises auf die Patenterteilung: **02.03.2016**
(21) Anmeldenummer: 09769056.4
(22) Anmeldetag: 24.04.2009
(51) Int. Cl.: B06B 3/00, B29C 65/08

(54) **SONOTRODE FÜR EINE ULTRASCHALLSCHWINGEINHEIT**
SONOTRODE FOR AN ULTRASONIC OSCILLATING UNIT
SONOTRODE POUR UNE UNITÉ ÉMETTRICE D'ULTRASONS

(30) Priorität: 27.06.2008 DE 102008002744
(43) Veröffentlichungstag der Anmeldung: 02.03.2011
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2009/055005
(87) Internationale Veröffentlichungsnummer: WO 2009/156207

(56) Entgegenhaltungen:
- WO-A1-99/59760
- WO-A1-2006/099872
- CH-A5- 671 529
- DE-B3-102005 063 230
- DE-U1- 9 102 187
- US-A- 4 975 133
- US-A- 5 096 532

## Beschreibung

Die vorliegende Erfindung betrifft eine Ultraschallschwingeinheit bestehend aus einem Konverter und einer gegebenenfalls über einen Amplitudentransformator mit dem Konverter verbundene Sonotrode, wobei die Sonotrode eine im wesentlichen zylinderflächenförmige Siegelfläche hat und die Ultraschallschwingeinheit eine Halterung zur Befestigung der Ultraschallschwingeinheit an einem Maschinenständer einer Ultraschallschweißvorrichtung aufweist.

Das Ultraschallschweißen ist ein Verfahren zum Fügen von Kunststoffen. Ultraschall ist eine mechanische Schwingung oberhalb der Hörgrenze. Der Frequenzbereich beginnt bei etwa 20 kHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (Booster) verbundene Sonotrode, auf das Werkstück bzw. das zu bearbeitende Material aufgebracht. Die Fläche der Sonotrode, die dafür vorgesehen ist, mit dem zu bearbeitenden Material in Kontakt zu treten, wird auch als Siegelfläche bezeichnet.

Die Ultraschallschwingeinheit stellt somit ein im Betrieb schwingendes Gebilde dar und besteht aus dem Konverter, gegebenenfalls dem Amplitudentransformationsstück und der Sonotrode.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Genau genommen unterscheidet sich die Resonanzfrequenz etwas von der Eigenfrequenz, da jedes reale System gedämpft ist. Im folgenden werden jedoch - wie auch häufig in der Literatur - die Begriffe Resonanzfrequenz und Eigenfrequenz synonym benutzt.

Die wichtigste Eigenfrequenz der Ultraschallschwingeinheit ist im allgemeine die Eigenfrequenz, bei der sich in der Ultraschallschwingeinheit eine stehende Longitudinalschwingung mit Wellenknoten und Wellenbäuchen ausbildet. Dabei bildet sich an den stirnseitigen Enden der Sonotrode jeweils ein Wellenbauch aus.

An einem der stirnseitigen Enden ist der Konverter angeschlossen, der die entsprechende Ultraschallanregungsfrequenz erzeugt. Gegebenenfalls ist zwischen Konverter und Sonotrode ein Booster oder Amplitudentransformator angeschlossen, der die Amplitude der Ultraschallschwingung, nicht aber die Frequenz verändert. Durch das Vorsehen eines Boosters wird die Eigenfrequenz der Sonotrode und damit die Lage der Schwingungsknoten der Longitudinalschwingung nicht beeinflusst.

Für manche Anwendungsfälle sind das Amplitudentransformationsstück und die Sonotrode einstückig ausgebildet, d.h. optisch nicht mehr zu unterscheiden. Um daher die Sonotrode vom Amplitudentransformationsstück zu unterscheiden, ist es notwendig, die Lage der Schwingungsbäuche der reinen Longitudinalschwingung zu bestimmen. Die Sonotrode umfasst immer die Siegelfläche. Jeder Abschnitt, der in Längsrichtung von Schwingungsmaximum zu Schwingungsmaximum reicht und der die Eigenfrequenz der reinen Longitudinalschwingung nicht beeinflusst, ist nicht Teil der Sonotrode. Beeinflusst hingegen ein solcher Abschnitt die Eigenfrequenz der reinen Longitudinalschwingung, d.h. kann er nicht ohne wesentliche Änderung der Eigenfrequenz entfernt werden, so gehört er zur Sonotrode.

Bei der Bearbeitung von Materialien mit Hilfe von Ultraschall wird im allgemeinen das zu bearbeitende Material zwischen der Sonotrode und einem (nicht zum Schwinggebilde gehörenden) Gegenwerkzeug, welches auch Amboss genannt wird, positioniert. Die mit dem zu bearbeitenden Material in Kontakt stehende Sonotrode überträgt dann die Ultraschallenergie auf das zu bearbeitende Material, welches dadurch beispielsweise verschweißt oder abgetrennt wird. Die zum Plastifizieren der Materialbahn benötigte Wärme wird durch die Umwandlung von Ultraschallschwingungen in Reibungsenergie erzeugt. Aufgrund der Grenzflächen- und Molekular-reibung entsteht somit Wärme, die den Kunststoff anschmelzen lässt.

Bei den meisten Sonotroden wird die longitudinale Ultraschallschwingung zum Energieübertrag über die Siegelfläche genutzt.

Es gibt jedoch auch Sonotroden mit einer im wesentlichen zylindermantelflächenförmigen Siegelfläche, welche die sich quer zur longitudinalen Ausbreitungsrichtung der Ultraschallschwingung ausbildende Radialultraschallschwingung zum Energieübertrag nutzen. Diese Sonotroden bestehen häufig aus einem im wesentlichen stabförmigem Abschnitt, an den sich Konverter und gegebenenfalls Booster anschließen, und einem radial über den stabförmigen Abschnitt borstehenden radförmigen oder glockenförmigen Abschnitt. Der rad- oder glockenförmige Abschnitt weist die Siegelfläche auf.

Diese Sonotroden weisen im allgemeinen zwei Haupteigenschwingungsmoden auf.

Die eine Eigenschwingungsmode entspricht im wesentlichen der longitudinalen Resonanzschwingung des stabförmigen Abschnitts. Diese Resonanzschwingung hat eine relativ große Longitudinalschwingungsamplitude. Damit verbunden ist jedoch auch eine erzwungene Beeinflussung des Materials in Transversalrichtung, d.h. senkrecht zur Stabachse. Diese erzwungene Beeinflussung äußert sich in einer Dickenschwingung, die sich radial zur Stabachse ausbreitet. Die Schwingungsamplitude der Dickenschwingung ist relativ klein, was zur Folge hat, dass der Großteil (mehr als 90%) der im Schwingungssystem aufgenommenen Schwingungsenergie in der Longitudinalschwingung enthalten ist.

Die andere Eigenschwingungsmode entspricht im wesentlichen der Resonanz der Radial-schwingung des Radabschnitts. Damit verbunden ist eine vergleichsweise kleine (erzwungene) Schwingung in longitudinaler Richtung. In dieser Eigenschwingungsmode ist der Großteil (meist mehr als 90%) der im Schwingungssystem aufgenommenen Schwingungsenergie in der Radialschwingung enthalten.

Beim Rotationsschweißen wird die zweite Eigenschwingungsmode verwendet, da durch Erzeugen einer relativ kleinen Longitudinalschwingung im stabförmigen Abschnitt der Sonotrode eine relativ große Radialschwingung im Radabschnitt der Sonotrode erzeugt werden kann.

So sind Sonotroden mit zylinderflächenförmiger Siegelfläche bekannt, die zum kontinuierlichen Ultraschallbearbeiten von bewegten Materialbahnen eingesetzt werden. Diese Sonotroden werden im Betrieb um ihre Längsachse rotiert, so dass sich die zylinderflächenförmige Siegelfläche im wesentlichen mit der gleichen Geschwindigkeit bewegt, wie die zu bearbeitende Materialbahn. Somit ist bei diesen Sonotroden immer nur ein kleiner Teil der Siegelfläche mit der Materialbahn in Kontakt.

Die Ultraschalleinheit, d.h. das Schwinggebilde, muss entsprechend relativ zum zu bearbeitenden Material bzw. der zu bearbeitenden Materialbahn positioniert gehalten werden. Dabei sind hohe Anforderungen an die Halterung der Ultraschalleinheit zu richten, da die Halterung einerseits sicherstellen muss, dass die Siegelfläche exakt an ihrer Position relativ zum zu bearbeitenden Material gehalten wird, und andererseits die Ultraschalleinheit schwingfähig bleiben muss, so dass nur ein vernachlässigbarer Teil der Ultraschallenergie in den Maschinenständer übertragen wird.

Da sich innerhalb des Schwinggebildes in Längsrichtung eine stehende Ultraschallwelle ausbildet, d.h. sich Schwingungsknoten und Schwingungsbäuche bilden, werden Schwinggebilde häufig an den Schwingungsknoten der Longitudinalschwingung gelagert. Die Entkopplung der Dickenschwingung, d.h. der Transversalschwingung, erfolgt meist durch Einsatz von O-Ringen. Zudem erfolgt die Halterung meist in Bereichen des Schwinggebildes, wo nur Schwingungen mit geringer Amplitude zu erwarten sind.

Die Halterung mittels O-Ring sorgt zwar für eine sehr gute Schwingungsentkopplung, ist jedoch in radialer und axialer Richtung sehr weich, so dass eine präzise Positionierung der Sonotrode relativ zum zu bearbeitenden Material nicht verwirklicht werden kann, da die Sonotrode im angeregten Zustand oder beim in Kontakt treten mit dem zu bearbeitenden Material "ausweichen" kann.

Vereinzelt sind auch starre Lagerungen vorgeschlagen worden. So zeigt beispielsweise die Figur 6 der EP 1 455 957 B1 eine starre Z-förmige Lagerung einer Rotationssonotrode. Mit Hilfe dieser Lagerung kann eine relativ gute Schwingungsentkopplung bei gleichzeitig guter Steifigkeit der Halterung in axialer Richtung erzielt werden. Allerdings ist die Halterung in radialer Richtung relativ weich, so dass eventuell auftretende Biegekräfte nur eingeschränkt aufgenommen werden können. Zudem beansprucht die Z-förmige Lagerung in Radialrichtung einen relativ großen Platz, was wiederum die Anwendungsmöglichkeiten der Rotationssonotrode einschränkt.

In Figur 13 der EP 1 455 957 ist bereits eine Rotationssonotrode mit zwei Z-förmigen Lagerungen gezeigt, die beidseitig der Sonotrode angeordnet sind. Auch hier kann eine relativ gute Schwingungsentkopplung bei guter Steifigkeit in axialer Richtung erzielt werden. Die Lagerung ist in radialer Richtung sehr weich, und obgleich aufgrund der beidseitigen Lagerungen Biegekräfte im Vergleich zur einseitigen Lagerung besser aufgenommen werden können, kann es trotzdem zu einer zeitweiligen Verbiegung der Ultraschalleinheit mit entsprechenden negativen Folgen für das Schweißergebnis kommen. Auch bei dieser Ausführungsform ist ist der Platzbedarf am Umfang der Ultraschalleinheit aufgrund der Z-förmigen Halterung relativ groß.

Weiterhin ist in der WO 99/059760 eine Lagerung gezeigt, die in den Schwingungsmaxima angreift. Hierzu wird zwischen zwei schwingenden Elementen eine dünne Metallscheibe eingeklemmt. Diese wiederum hat eine spezielle Formgebung, um die hohe Schwingungsamplitude aufzunehmen und nicht an die radial außen liegende Lagerstelle weiterzugeben. Diese Scheibenlagerung zeigt eine relativ gute Steifigkeit in radialer Richtung, dennoch kann die Scheibe nur an Lagerstellen mit geringen Ultraschallamplituden befestigt werden und bietet nur eine geringe axiale Steifigkeit der Ultraschalleinheit. Zudem ist der Platzbedarf in radialer Richtung sehr groß. Des weiteren können die dünnen Lagerscheiben Radialkräfte nur eingeschränkt aufnehmen und sind anfällig für Spannungsrisse.

Die WO 99/059760 kann als nächstliegender Stand der Technik für die Sonotrode nach Anspruch 1 umgesehen werden.

Sie zeigt nämlich auch eine Sonotrode mit einer zylinderförmigen Siegelfläche und einem stabförmigen Abschnitt.

Aus diesem Grund hat die Anmelderin bereits in der DE 10 2005 063 230 B3 eine Ultraschallschwingeinheit mit zwei in Axialrichtung hintereinander angeordneten Boostern vorgeschlagen, auf die eine hülsenförmige Halterung aufgeschoben wird, die sich jeweils an radial über die Booster vorstehenden Flansche abstützt, welche in Schwingungsknoten der Schwingeinheit angeordnet sind. Diese Ausführungsform sorgt für eine sehr biegesteife Lagerung. Zudem können durch diese Lagerung sehr hohe Radialkräfte aufgenommen werden, wobei die Schwingungsentkopplung gleichzeitig sehr gut möglich ist. Die Hülsenhalterung hat zudem den Vorteil, dass die Bauhöhe in radialer Richtung sehr gering ist. Nachteilig ist jedoch, dass durch das Vorsehen von zwei Boostern die Bauhöhe in axialer Richtung zunimmt.

Die DE 9102187.1 zeigt eine Ultraschall-Schweißvorrichtung zur Verbindung von teilweise aus thermoplastischem Kunststoff bestehenden Bahnmaterialien.

Ausgehend von diesem Stand der Technik ist es daher Aufgabe der vorliegenden Erfindung, eine Sonotrode und eine Ultraschallschwingeinheit mit einer zylinderflächenförmigen Sonotrode mit Halterung bereitzustellen, die sowohl in axialer als auch radialer Richtung eine geringe Bauhöhe aufweist, eine gute Schwingungsentkopplung erlaubt und zugleich radial und axial eine gute Steifigkeit bereitstellt.

Erfindungsgemäß wird diese Aufgabe durcheine Sonotrode gemäß Anspruch 1 bzw. eine Ultraschallschwingeinheit gemäß Anspruch 4 oder 5 gelöst.

Durch diese Maßnahme kann der axiale Aufbau der Ultraschallschwingeinheit reduziert werden, da die Halterung direkt an der Sonotrode und damit in axialer Richtung sehr nahe an der Siegelfläche oder sogar im Bereich der Siegelfläche angreift. Obgleich bei zylinderflächenförmigen Sonotroden die Querschwingungen erheblich sind, hat sich überraschenderweise gezeigt, dass bei dieser Art von Sonotrode die Halterung direkt an der Sonotrode befestigt werden kann, ohne dass ein zu großer Anteil der Ultraschallschwingung in die Halterung übertragen wird.

Weiterhin kann auf ein radiales Entkopplungselement vollständig verzichtet werden, wodurch auch der radiale Aufbau auf ein Minimum reduziert werden kann.

Die Halterung sorgt in einer bevorzugten Ausführungsform für eine starre Befestigung der Sonotrode am Maschinenständer, d.h. ohne entsprechende federnden Elemente, wie z. B. O-Ringe.

Zum Beispiel können Präzisionsrollenlager, Zahnriemenscheibe oder Präzisionsspannmuttern direkt in der Halterung angebracht werden.

Die Halterung greift in einer bevorzugten Ausführungsform im wesentlichen an einem Schwingungsknoten der longitudinalen Ultraschallschwingung an, so daß in Axialrichtung mit keiner Bewegung zu rechnen ist. Allerdings ist an diesem Punkt in der Querrichtung, das heißt in radialer Richtung, die Schwingungsbewegung nicht zu vernachlässigen. Vorzugsweise wird die Befestigung hinsichtlich Geometrie und Material derart gewählt, dass das Befestigungselement sich an der Verbindungsstelle mit der Radialamplitude der Sonotrode synchron bewegt.

Vorzugsweise ist das Befestigungselement derart ausgebildet, dass sich die Radialbewegung des Befestigungselementes aufgrund der Radialschwingung in axialer Richtung abbaut. So kann das Befestigungselement beispielsweise hülsenförmig ausgebildet sein. Diese Hülse greift vorzugsweise an ihrem Ende an der Sonotrode an. Die Befestigungshülse wiederum ist vorzugsweise an einem von den Angriffspunkten an der Sonotrode beabstandeten Punkt an dem Maschinenständer oder weiteren Anbauteilen befestigt. Durch den vorgesehenen Abstand zwischen Berührungspunkt zwischen Befestigungshülse und Sonotrode einerseits und Angriffspunkt zum Befestigen der Befestigungshülse am Maschinenständer ist die Radialbewegung des Befestigungselementes an dem Haltepunkt zum Maschinenständer deutlich kleiner als die Radialbewegung am Angriffspunkt zur Sonotrode. Die verbleibende Restschwingung, die in der Regel deutlich kleiner als ein Mikrometer ist, hat jedoch keine nachteiligen Auswirkungen.

Die Befestigungselemente sind dabei so auszulegen, dass die Befestigungselemente keine Eigenresonanz im Bereich der Hauptresonanz der Rotationssonotrode haben. Generell sollten die Eigenresonanzen der Befestigungselementes nicht in einem Bereich von ± 1000 Hz um die Hauptresonanz der Sonotrode liegen.

Die im Stand der Technik bekannten Rotationssonotroden, d.h. bekannte Sonotroden mit zylinderflächenförmiger Siegelfläche, weisen jedoch nur einen Schwingungsknoten der longitudinalen Ultraschallschwingung auf, der sich exakt im Zentrum des radförmigen Abschnitts befindet, so dass bei diesen Sonotroden keine Halterung am Schwingungsknoten möglich ist.

Daher weist erfindungsgemäß die Ultraschallschwingeinheit eine Sonotrode auf, die bei einer resonanten Anregung drei Schwingungsknoten zeigt. Eine solche Sonotrode kann beispielsweise dadurch verwirklicht werden, dass die Eigenfrequenz einer Longitudinalmode oder ein Vielfaches dieser Eigenfrequenz eines stabförmigen Abschnittes der Sonotrode im wesentlichen gleich der Eigenfrequenz einer Radialmode oder ein Vielfaches dieser Eigenfrequenz eines rad- oder glockenförmigen Abschnittes der Sonotrode ist. Dadurch können nämlich sowohl Radialals auch Longitudinalschwingung zugleich in Resonanz gebracht werden. Dies führt jedoch dazu, dass der sich bei idealen Longitudinalschwingungen ausbildende Schwingungsknoten im Zentrum der Siegelfläche in drei voneinander beabstandete Schwingungsknoten aufgeteilt wird.

Dabei besteht die Sonotrode aus einem stabförmigem Abschnitt und einem vorzugsweise in Längsrichtung des stabförmigen Abschnitt in der Mitte angeordneten radförmigen Abschnitt bestehen, der einen größeren Durchmesser als der stabförmige Abschnitt hat, wobei das Verhältnis der Länge a des stabförmigen Abschnittes zum Durchmesser D1 des radförmigen Abschnitts größer als 0,8 und kleiner als 2 ist.

Besonders zweckmäßig ist es überdies wenn das Verhältnis der Länge a des stabförmigen Abschnittes zum Durchmesser D1 des radförmigen Abschnitts kleiner als 1,5 und besonders bevorzugt kleiner als 1,15 ist.

Alternativ oder in Kombination dazu kann die Ultraschallschwingeinheit derart ausgebildet sein, dass durch den Konverter eine Eigenmode der Sonotrode angeregt wird, bei der sich die Schwingungsenergie auf die Longitudinalschwingung und die Radialschwingung aufteilt. Dabei liegt das Verhältnis der in der Radialschwingung aufgenommene Energie zu der in der Longitudinalschwingung aufgenommene Energie vorzugsweise zwischen 20:80 und 80:20 und besonders bevorzugt zwischen 30:70 und 70:30 sowie am besten zwischen 40:60 und 60:40.

Dadurch dass ein nicht unerheblicher Anteil der Schwingungsenergie sowohl in der Longitudinalschwingung als auch in der Radialschwingung enthalten ist, kommt es in dem Bereich der Sonotrode, in dem der radförmige Abschnitt an dem stabförmigen Abschnitt befestigt ist, zu einer Überlagerung der Schwingungen und zur Ausbildung von mehreren (meist drei) Schwingungsknoten, an deren Position dann gegebenenfalls die Halterung angreifen kann.

Es wird davon ausgegangen, dass erfingdungsgemäß die beschriebenen Sonotroden auch ohne eine Halterung direkt an der Sonotrode mit Vorteil eingesetzt werden können.

Es sei jedoch darauf hingewiesen, dass an den genannten Punkten die Dickenschwingung bzw. die transversale Ultraschallschwingung nicht vernachlässigbar ist. Daher kann es während des Betriebes zu einer Verkippung der Ultraschallschwingeinheit gegenüber der Längsachse kommen. Gegebenenfalls müssen daher weitere Maßnahmen ergriffen werden, um der Halterung in radialer Richtung gewisse federnde Eigenschaften zu verleihen. Darauf kann meist verzichtet werden, wenn die Sonotrode im wesentlichen rotationssymmetrisch ist und sich die Halterung die Sonotrode hülsenartig umgebend an dieser abstützt, da sich die Dickenschwingung bzw. die Transversalschwingung dann radial gleichmäßig auf die Halterung überträgt und sich radial auf die Halterung wirkende Kräfte gegenseitig im wesentlichen auslöschen.

In einer bevorzugten Ausführungsform ist die Halterung aus einem anderen Material als die Sonotrode gefertigt. Besonders bevorzugt kommen schwingungsdämpfende Materialien für die Halterung zum Einsatz. Gute Ergebnisse wurden mit Edelstahl und Gussmaterialien, wie z. B. Grauguss erzielt.

In einer weiteren bevorzugten Ausführungsform ist vorgesehen, dass die Halterung zusätzlich an dem Amplitudentransformator oder dem Konverter befestigt ist. Durch diese Maßnahme wird die Biegesteifigkeit der Halterung weiter verstärkt. Dabei kann sowohl Sonotrode als auch Amplitudentransformator oder Konverter einen Anschlag aufweisen und die Halterung eine Hülse aufweisen, die sich sowohl am Anschlag der Sonotrode als auch am Anschlag des Amplitudentransformators oder dem Konverter abstützt. Grundsätzlich könnte die Halterung prinzipiell ähnlich der in der DE 10 2005 063 230 in Figur 1 dargestellten Halterung sein, mit dem Unterschied, dass erfindungsgemäß kein zweiter Booster verwendet wird, sondern sich die Hülse direkt an der Sonotrode abstützt.

Es ist von Vorteil, wenn die Halterung auch am Booster oder am Konverter an einem Schwingungsknoten der Ultraschallschwingeinheit angreift.

Dabei ist mit Vorteil die Halterung starr mit der Sonotrode verbunden, da nur dann die exakte Positionierung der Sonotrode in Bezug auf das zu bearbeitende Material sichergestellt ist.

Weitere Vorteile, Merkmale und Anwendungsmöglichkeiten werden deutlich anhand der folgenden Beschreibung bevorzugter Ausführungsformen sowie der dazugehörigen Figuren. Es zeigen:
Figur 1 eine Schnittansicht einer Ultraschallschwingeinheit des Standes der Technik,
Figur 2 eine Schnittansicht einer ersten Ausführungsform der Erfindung,
Figur 3 eine Schnittansicht einer zweiten Ausführungsform der Erfindung,
Figur 3a eine Schnittansicht einer dritten Ausführungsform der Erfindung,
Figur 3b eine vergrößerte Darstellung von Figur 3a,
Figur 3c eine vergrößerte Darstellung von Figur 3a,
Figur 4 eine perspektivische Ansicht der Ausführungsform von Figur 2, und
Figur 5 eine perspektivische Ansicht der Ausführungsform von Figur 3.

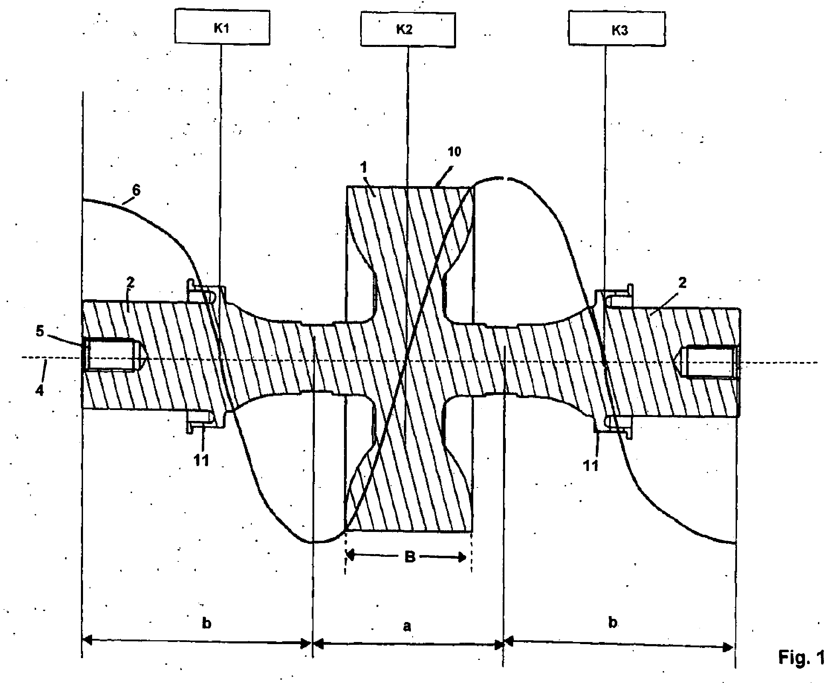

In Figur 1 ist ein Teil einer Ultraschallschwingeinheit des Standes der Technik gezeigt. Der dargestellte Teil der Ultraschallschwingeinheit besteht aus der zentral angeordneten Rotationssonotrode 1 mit der Länge a sowie zweier auf beiden Seiten der Sonotrode 1 angeformten Amplitudentransformationsstücken 2 der Länge b.

Die Rotationssonotrode 1 weist eine zylinderflächenförmige Siegelfläche 10 auf, die mit dem zu bearbeitenden Material in Kontakt tritt. Die Siegelfläche 10 hat in Axialrichtung eine Länge B.

Der Verlauf der Amplitude 6 der Ultraschalllängsschwingung ist in Figur 1 schematisch eingetragen. Man erkennt, dass die Ultraschall-Längsschwingung im Zentrum der Siegelfläche 10 einen Schwingungsknoten K2 durchläuft. Die Amplitudenmaxima legen die Grenzfläche zwischen Sonotrode 1 und den Amplitudentransformationsstücken 2 fest. Eines der Amplitudentransformationsstücke 2 kann mit Hilfe einer der Bohrungen 5 an einem Konverter (nicht gezeigt) befestigt werden. Die Ultraschall-Längsschwingung breitet sich dann entlang der Längsachse 4 aus.

Um die Ultraschallschwingeinheit zu halten, sind Z-förmige Halteringe 11 an den Amplitudentransformationsstücken 2 angeformt, wobei die Z-förmigen Halteringe 11 im wesentlichen im Bereich eines Schwingungsknotens K1, K3 angeordnet sind.

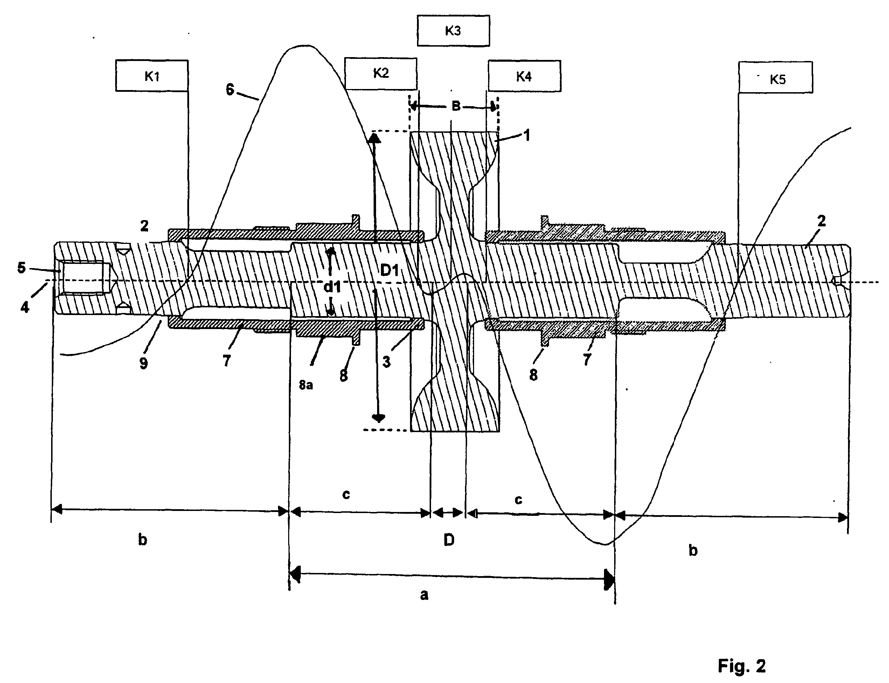

In Figur 2 ist eine erste Ausführungsform der vorliegenden Erfindung gezeigt. Auch hier ist die Amplitude 6 der Längsschwingung schematisch dargestellt.

Die Längsschwingung zeigt im dargestellten Bereich fünf Schwingungsknoten K1, K2, K3, K4, K5, zwischen denen sich jeweils ein Schwingungsmaxima befindet. Da drei Schwingungsknoten K2, K3, K4 im Bereich der Siegelfläche 10 angeordnet sind, wird die Grenzfläche zwischen Sonotrode 1 und angrenzenden Amplitudentransformationsstücken 2 durch die Schwingungsmaxima festgelegt, die sich zwischen dem ersten Knoten K1 und dem zweiten Knoten K2 bzw. zwischen dem vierten Knoten K4 und dem fünften Knoten K5 befinden, festgelegt. Die axiale Länge der Sonotrode ist wieder mit dem Buchstaben a gekennzeichnet. Die axiale Länge der beiden Amplituderitransformationsstücke ist mit dem Buchstaben b bezeichnet. Die Siegelfläche 10 der Sonotrode 1 hat einen Durchmesser D₁, während der Durchmesser der Sonotrode außerhalb der Siegelfläche d₁ beträgt. Mit anderen Worten besteht die Sonotrode 1 aus zwei zylinderförmigen Anschlussabschnitten mit dem Durchmesser d₁ und einem zwischen den Anschlussabschnitten angeordneten radförmigen Abschnitt mit dem Durchmesser D₁, an dessen zylindrischer Umfangsfläche die Siegelfläche 10 angeordnet ist. Es hat sich gezeigt, dass das Verhältnis d1/D1 am besten kleiner als 0,7 und besonders bevorzugt kleiner als 0,35 ist.

Dabei ist die Länge b des Amplitudentransformationsstück in Längsrichtung größer als die Längserstreckung B der Siegelfläche 10, wobei die Länge b des Amplitudentransformationsstück in Längsrichtung vorzugsweise mindestens doppelt so groß, besonders bevorzugt mindestens dreimal so groß wie die Längserstreckung B der Siegelfläche 10 ist.

Vergleicht man die Sonotrode 1 in Figur 1 mit der Sonotrode in Figur 2 fällt auf, dass der Schwingungsknoten im Zentrum der Siegelfläche in Figur 2 in drei Schwingungsknoten K2, K3, K4 sowie zwei (kleine) Schwingungsmaxima aufgeteilt wurde. Der Abstand zwischen den beiden Schwingungsmaxima ist in der Figur 2 mit D bezeichnet. Obgleich daher im Bereich der Siegelfläche 10 Schwingungsmaxima der Längsschwingung vorhanden sind, die im allgemeinen mit Schwingungsminima der Quer- oder Dickenschwingung verknüpft sind, wird das Schweißergebnis an der Siegelfläche 10 praktisch nicht beeinflusst.

Weiterhin ist die Länge b des Amplitudentransformationsstück größer als der Abstand c zwischen der Grenzfläche zwischen Amplitudentransformationsstück und Sonotrode und dem ersten (kleinen) Schwingungsmaximum auf Höhe der Siegelfläche 10, wobei der Abstand c wiederem größer als der Abstand D zwischen den beiden (kleinen) Schwingungsmaxima auf Höhe der Siegelfläche 10 ist.

Es hat sich gezeigt, dass in einer bevorzugten Ausführungsform das Verhältnis d1/b aus dem Durchmesser d₁ der zylinderförmigen Anschlussabschnitte der Sonotrode 1 zu der Längserstreckung b des Amplitudentransformationsstückes kleiner oder gleich 0,7 und vorzugsweise kleiner als 0,35 ist.

In der gezeigten bevorzugten Ausführungsform entspricht der Durchmesser D₁ der zylinderflächenförmigen Siegelfläche 10 in etwa der Längserstreckung b des Amplitudentransformationsstückes.

Um die Ultraschallschwingeinheit zu halten, sind zwei Hülsen 7 vorgesehen, die sich an ihren stirnseitigen Enden an entsprechenden Vorsprüngen 3, 9 an der Sonotrode 1 und dem Amplitudentransformationsstück 9 abstützen. Die Hülsen 7 weisen wiederum einen sich ringförmig nach außen erstreckenden Flansch 8 auf, an dem die Ultraschallschwingeinheit gehaltert werden kann. Die Hülsen 7 weisen in der gezeigten Ausführungsform verstärkte Abschnitte 8a auf. Die Hülsen 7 könnten auch mittels Lagern, z.B. Radiallager oder Kegellager, an den verstärkten Abschnitten 8a gehalten werden. In diesem Fall würde der Flansch 8 lediglich als Anschlagsfläche dienen.

Die Hülsen 7 können auf die Ultraschallschwingeinheit aufgeschrumpft werden, d.h. die entsprechenden Anlageabschnitte der Hülse 7 sind geringfügig weiter voneinander beabstandet als die entsprechenden Anschlagabschnitte 3 und 9 an Sonotrode und Amplitudentransformationsstück, so dass entweder durch Abkühlen der Ultraschallschwingeinheit oder Aufwärmen der Hülse 7 diese in ihre gewünschte Position gebracht werden kann. Sobald Ultraschallschwingeinheit und Hülse 7 die gleiche Temperatur haben, stützt sich die Hülse 7 an ihren beiden Anlageabschnitten an den entsprechenden Anlageabschnitten 3, 9 an Sonotrode 1 und Amplitudentransformationsstück 2 ab. Selbstverständlich könnte auch jede andere Art der Befestigung der Hülse 7 an der Sonotrode verwendet werden. Beispiele für alternative Befestigungsarten sind das Verschrauben oder Verlöten.

Die Abstützpunkte der Hülse 7 liegen einerseits im Schwingungsknoten K2, K4 der Sonotrode und andererseits im Schwingungsknoten K1, K5 des Amplitudentransformationsstückes 2. Bei der gezeigten Ausführungsform greift die Halterung somit sogar innerhalb des Siegelflächenabschnittes an der Sonotrode 1 an.

Man erkennt, dass zwischen dem Knoten K3, der exakt im Zentrum der Siegelfläche 10 liegt, und dem Knoten K2 in Längsrichtung eine halbe Wellenlänge liegt.

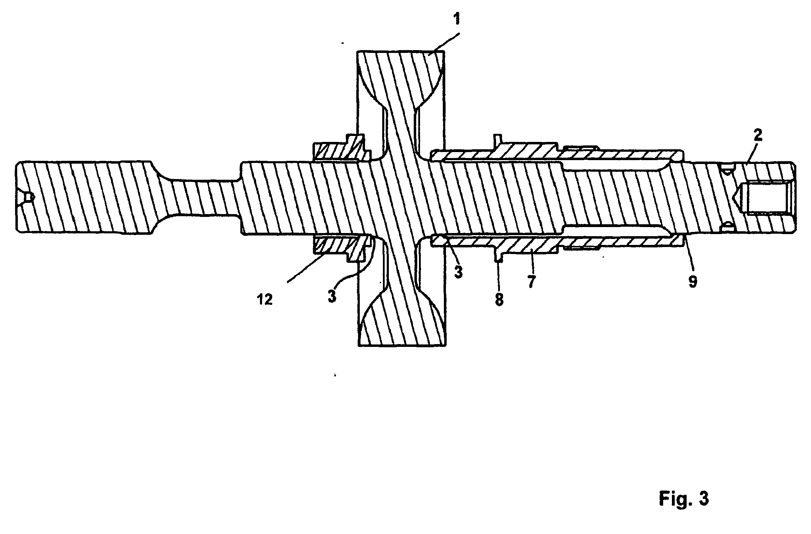

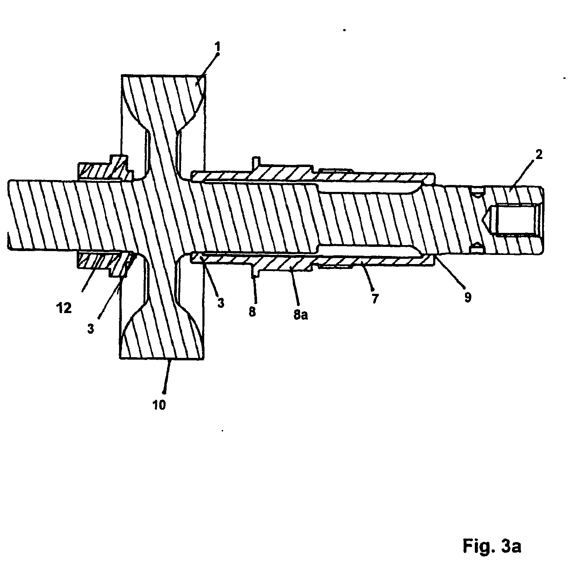

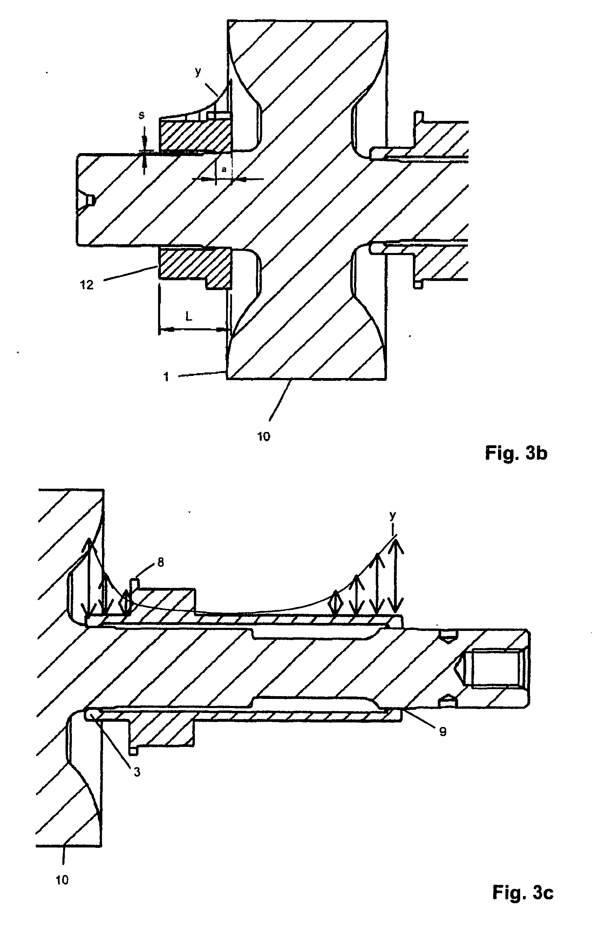

Es versteht sich, dass die hülsenförmige Halterung nicht unbedingt auf beiden Seiten der Sonotrode 1 vorgesehen sein muß. So kann beispielsweise, wie in Figur 3, die eine zweite Ausführungsform zeigt, dargestellt ist, auf der einen Seite der Sonotrode 1 lediglich ein Stützelement 12 vorgesehen sein, das sich nur an einem Punkt 3 abstützt. Selbstverständlich kann auch auf beiden Seiten der Sonotrode auf die hülsenförmige Halterung verzichtet werden. Auch sind Ausführungsformen denkbar, bei denen auf die Amplitudentransformationsstücke verzichtet wird und die Sonotrode direkt an einem Konverter befestigt wird.

Selbstverständlich könnte die Sonotrode auch lediglich auf einer Seite gehalten werden.

Eine dritte Ausführungsform ist in Figur 3a dargestellt. Im Unterschied zur in Figur 3 gezeigten Ausführungsform ist hier nur auf einer Seite der Sonotrode ein Amplitudentransformationsstück vorgesehen, so dass die Bauhöhe reduziert werden konnte.

In den Figuren 3b und 3c sind jeweils die Halteelemente vergrößert dargestellt. So zeigt Figur 3b eine als Stützelement 12 ausgebildete Halterung. Dieses im Wesentlichen ring- bzw. hülsenförmige Stützelement 12 stützt sich mit der Kontaktfläche 3 mit der Breite a, die sich ringförmig um die Sonotrode erstreckt, an der Sonotrode ab. Diese Kontaktfläche 3 ist an einem longitudinalen Schwingungsknoten der Sonotrode 1 angeordnet. An diesem Punkt kommt es jedoch zu Transversalschwingungen, deren Amplitudenstärke schematisch mit der Bezeichnung Y in die Figur eingetragen worden ist. Man erkennt, dass die Transversalschwingung, d.h. die Bewegung in Radialrichtung im Bereich der Kontaktfläche 3 am Größten ist und sich in Axialrichtung schnell abbaut, so daß am von der Kontaktfläche 3 abgewandten Ende des Stützelementes 12 nahezu keine radiale Bewegung mehr festgestellt werden kann. Die Geometrie und das Material des Stützelementes 12 müssen derart gewählt werden, dass das Stützelement 12 keine Eigenresonanz im Bereich der Hauptfrequenz der Sonotrode aufweist.

Wie man in Figur 3b sieht, liegt das Stützelement 12 nur im Bereich der Kontaktfläche 3 an der Sonotrode auf. Außerhalb der Kontaktfläche 3 ist das Stützelement 12 mit dem Abstand s von der Sonotrode beabstandet. Die Breite a der Kontaktfläche liegt typischerweise im Bereich von 0,5 bis 10 mm und besonders bevorzugt im Bereich zwischen 3 und 5 mm. Dabei ist zu beachten, dass die zulässige Flächenpressung zwischen Stützelement 12 einerseits und Sonotrode 1 andererseits nicht überschritten wird.

Der Abstand s liegt typischerweise im Bereich zwischen 0,1 und 2 mm und besonders bevorzugt zwischen 0,5 und 1 mm. Der Abstand erleichtert die Montage und stellt sicher, dass es während des Betriebes der Sonotrode zu keiner Berührung zwischen Sonotrode und Stützelement 12 außerhalb der Kontaktfläche 3 kommt.

In Figur 3c ist die Halterung hülsenförmig ausgebildet. Das hülsenförmige Element liegt an zwei Anlageflächen 3, 9 an der Sonotrode an. Auch hier ist, obgleich die Anlagepunkte 3 und 9 jeweils im Bereich eines longitudinalen Schwingungsknoten liegen, mit radialen Schwingungen zu rechnen, die wie in Figur 3b schematisch als Linie Y eingezeichnet wurden. Auch hier ist zu erkennen, dass die innerhalb der Hülse auftretende Radialschwingung im Wesentlichen auf den Bereich um die Anlageflächen 3 und 9 beschränkt ist, während die Radialschwingung beispielsweise im Bereich des Flansches 8 schon deutlich abgeklungen ist, so daß hier ohne weitere Nachteile entsprechende Anbauteile bzw. der Maschinenständer befestigt werden können.

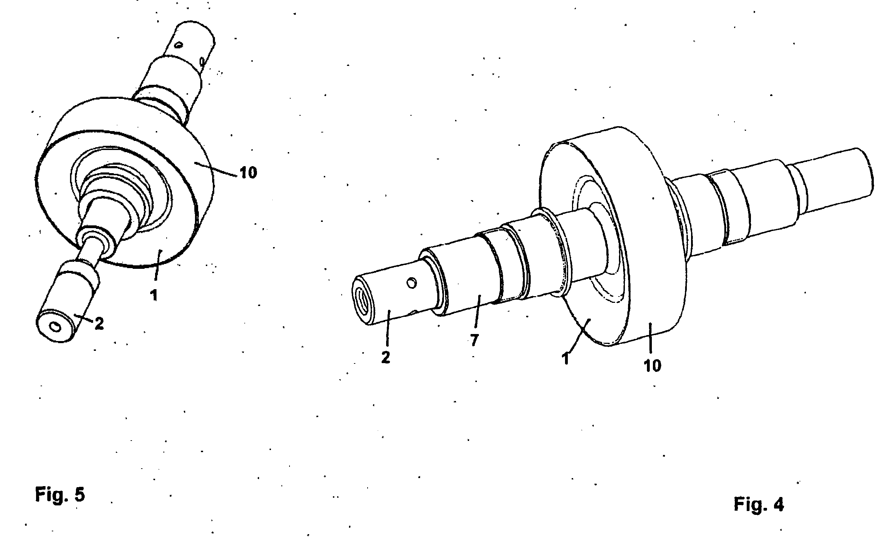

Die Figuren 4 und 5 zeigen perspektivische Ansichten der Ausführungsform der Figuren 2 und 3.

### Bezugszeichenliste

- 1: Sonotrode
- 2: Amplitudentransformationsstück
- 3: Abstützpunkt
- 4: Längsachse
- 5: Bohrung
- 6: Amplitude
- 7: Hülse
- 8: Flansch
- 8a: verstärkte Abschnitte
- 9: Anschlagabschnitt
- 10: Siegelfläche
- 11: Z-förmiger Haltering
- 12.: Stützelement
- a: Länge der Sonotrode
- b: Länge des Boosters
- K1-K5: Schwingungsknoten

## Patentansprüche

1. Sonotrode zur Verwendung in einer Ultraschallschweißvorrichtung mit einem Maschinenständer an dem eine Ultraschallschwingeinheit und ein Gegenwerkzeug befestigt ist, wobei die Sonotrode (1) eine im wesentlichen kreisringförmige oder zylinderflächenförmige Siegelfläche (10) hat und die Ultraschallschwingeinheit eine Halterung (3) zur Befestigung der Ultraschallschwingeinheit an einem Maschinenständer aufweist, wobei die Sonotrode aus einem stabförmigem Abschnitt und einem in Längsrichtung des stabförmigen Abschnitt in der Mitte angeordneten radförmigen Abschnitt besteht, wobei der Durchmesser des radförmigen Abschnitts größer als der Durchmesser des stabförmigen Abschnittes ist, und das Verhältnis der Länge des stabförmigen Abschnittes zum Durchmesser des radförmigen Abschnittes größer als 0,8 und kleiner als 2 ist und die Sonotrode bei einer resonanten Ultraschallanregung drei Schwingungsknoten zeigt, wobei jeder Abschnitt, der in Längsrichtung von Schwingungsmaximum zu Schwingungsmaximum reicht und der die Eigenfrequenz der reinen Longitudinalschwingung nicht beeinflusst, nicht Teil der Sonotrode ist.

2. Sonotrode nach Anspruch 1, **dadurch gekennzeichnet, dass** die Sonotrode rotationssymmetrisch ist.

3. Sonotrode nach einem der Ansprüche 1 bis 2, **dadurch gekennzeichnet, dass** das Verhältnis der Länge des stabförmigen Abschnittes zum Durchmesser des radförmigen Abschnitt kleiner als 1,5 und vorzugsweise kleiner als 1,15 ist.

4. Ultraschallschwingeinheit bestehend aus einem Konverter und einer gegebenenfalls über einen Amplitudentransformator (2) mit dem Konverter verbundenen Sonotrode nach einem der Ansprüche 1 bis 3, **dadurch gekennzeichnet, dass** der Konverter derart ausgelegt ist, dass eine Eigenmode der Sonotrode angeregt werden kann, bei der sich die Schwingungsenergie auf die Longitudinalschwingung und die Radialschwingung aufteilt, wobei das Verhältnis der in der Radialschwingung aufgenommene Energie zu der in der Longitudinalschwingung aufgenommene Energie vorzugsweise zwischen 20:80 und 80:20 und besonders bevorzugt zwischen 30:70 und 70:30 sowie am besten zwischen 40:60 und 60:40 beträgt.

5. Ultraschallschwingeinheit bestehend aus einem Konverter und einer gegebenenfalls über einen Amplitudentransformator (2) mit dem Konverter verbundenen Sonotrode (1) nach einem der Ansprüche 1 bis 3, wobei die Ultraschallschwingeinheit eine Halterung (3) zur Befestigung der Ultraschallschwingeinheit an einem Maschinenständer aufweist, **dadurch gekennzeichnet, dass** die Halterung (3) direkt ohne ein radiales Entkopplungselement an der Sonotrode (1) befestigt ist.

6. Ultraschallschwingeinheit nach Anspruch 5, **dadurch gekennzeichnet, dass** die Halterung (3) zusätzlich an dem Amplitudentransformator (2) oder dem Konverter befestigt ist.

7. Ultraschallschwingeinheit nach Anspruch 6, **dadurch gekennzeichnet, dass** sowohl Sonotrode (1) als auch Amplitudentransformator (2) oder Konverter einen Anschlag aufweisen und die Halterung (3) eine Hülse aufweist, die sich sowohl am Anschlag der Sonotrode (1 ) als auch am Anschlag des Amplitudentransformators (2) oder dem Konverter abstützt.

8. Ultraschallschwingeinheit nach Anspruch 7, **dadurch gekennzeichnet, dass** zumindest der Anschlag der Sonotrode (1) ringförmig ausgebildet ist oder aus mehreren ringförmig in Umfangsrichtung um die Sonotrode angeordneten Anschlagselementen besteht.

9. Ultraschallschwingeinheit nach einem der Ansprüche 5 bis 8, **dadurch gekennzeichnet, dass** die Sonotrode (1) eine Rotationssonotrode ist, wobei zwei Halterungen (3) vorgesehen sind, die auf gegenüberliegenden Seiten der Sonotrode (1) mit der Sonotrode (1) verbunden sind.

10. Ultraschallschwingeinheit nach einem der Ansprüche 5 bis 9, **dadurch gekennzeichnet, dass** die Halterung (3) starr mit der Sonotrode (1) verbunden ist.

11. Ultraschallschwingeinheit nach einem der Ansprüche 5 bis 10, **dadurch gekennzeichnet, dass** ein Amplitudentransformationsstück vorgesehen ist, wobei das Verhältnis B/b der Breite (B) der Siegelfläche (10) in Längsrichtung zur Länge (b) des Amplitudentransformationsstückes in Längsrichtung kleiner als 1, vorzugsweise kleiner als 0,8, besonders bevorzugt kleiner als 0,55 und am besten kleiner als 0,35 ist.

12. Ultraschallschweißvorrichtung mit einem Maschinenständer an dem eine Ultraschallschwingeinheit nach einem der Ansprüche 4 bis 11 und ein Gegenwerkzeug befestigt ist.

## Claims

1. A sonotrode for use in an ultrasonic welding apparatus comprising a machine stand to which an ultrasonic oscillating unit and a counterpart tool is fastened, wherein the sonotrode (1) has a sealing surface (10) which is substantially in the form of a circular ring or a cylinder surface and the ultrasonic oscillating unit has a holder (3) for fastening the ultrasonic oscillating unit to a machine stand, wherein the sonotrode comprises a bar-shaped portion and a wheel-shaped portion arranged at the center in the longitudinal direction of the bar-shaped portion, wherein the diameter of the wheel-shaped portion is larger than the diameter of the bar-shaped portion and the ratio of the length of the bar-shaped portion to the diameter of the wheel-shaped portion is greater than 0.8 and smaller than 2 and the sonotrode shows three oscillation nodes in the case of resonant ultrasonic excitation, wherein each portion, which lasts from one oscillation maximum to the next oscillation maximum in the longitudinal direction and which does not influence the natural frequency of the longitudinal oscillation, is not part of the sonotrode.

2. A sonotrode as set forth in claim 1 **characterised in that** the sonotrode is rotationally symmetrical.

3. A sonotrode as set forth in one of claims 1 to 2 **characterised in that** the ratio of the length of the bar-shaped portion to the diameter of the wheel-shaped portion is less than 1.5 and preferably less than 1.15.

4. An ultrasonic oscillating unit comprising a converter and a sonotrode optionally connected to the converter by way of an amplitude transformer (2) as set forth in one of claims 1 to 3 **characterised in that** the converter is so designed that a natural mode of the sonotrode can be excited, in which the oscillation energy is divided to the longitudinal oscillation and the radial oscillation, wherein the ratio of the energy in the radial oscillation to the energy in the longitudinal oscillation is preferably between 20:80 and 80:20 and particularly preferably between 30:70 and 70:30 and best between 40:60 and 60:40.

5. An ultrasonic oscillation unit comprising a converter and a sonotrode (1) optionally connected to the converter by way of an amplitude transformer (2) as set forth in one of claims 1 to 3, wherein the ultrasonic oscillation unit comprises a holder (3) for fastening the ultrasonic oscillation unit to a machine stand, **characterised in that** the holder (3) is fastened directly to the sonotrode (1) without a radial decoupling element.

6. An ultrasonic oscillation unit as set forth in claim 5 **characterised in that** the holder (3) is additionally fastened to the amplitude transformer (2) or the converter.

7. An ultrasonic oscillation unit as set forth in claim 6 **characterised in that** both the sonotrode (1) and also the amplitude transformer (2) or converter have an abutment and the holder (3) has a sleeve which bears both against the abutment of the sonotrode (1) and also the abutment of the amplitude transformer (2) or the converter.

8. An ultrasonic oscillation unit as set forth in claim 7 **characterised in that** at least the abutment of the sonotrode (1) is of an annular configuration or comprises a plurality of abutment elements arranged annularly in the peripheral direction around the sonotrode.

9. An ultrasonic oscillation unit as set forth in one of claims 5 to 8 **characterised in that** the sonotrode (1) is a rotational sonotrode, wherein there are provided two holders (3) which are connected to the sonotrode (1) on opposite sides thereof.

10. An ultrasonic oscillation unit as set forth in one of claims 5 to 9 **characterised in that** the holder (3) is rigidly connected to the sonotrode (1).

11. An ultrasonic oscillation unit as set forth in one of claims 5 to 10 **characterised in that** there is provided an amplitude transformation member, wherein the ratio B/b of the width (B) of the sealing surface (10) in the longitudinal direction of the length (b) of the amplitude transformation portion in the longitudinal direction is less than 1, preferably less than 0.8, particularly preferably less than 0.55 and best less than 0.35.

12. An ultrasonic welding apparatus comprising a machine stand to which an ultrasonic oscillation unit as set forth in one of claims 4 to 11 and a counterpart tool is fastened.

## Revendications

1. Sonotrode destinée à être utilisée dans un dispositif de soudure par ultrasons, avec un bâti de machine auquel sont fixés un émetteur d'ultrasons et un contre-outil, la sonotrode (1) présentant une surface réfléchissante (10) de forme globalement annulaire ou cylindrique et l'émetteur d'ultrasons comprenant un support (3) pour la fixation de l'émetteur d'ultrasons à un bâti de machine, la sonotrode étant constituée d'une portion en forme de tige et d'une portion en forme de roue disposée au centre, dans la direction longitudinale de la portion en forme de tige, le diamètre de la portion en forme de roue étant supérieur au diamètre de la portion en forme de tige et le rapport entre la longueur de la portion en forme de tige et le diamètre de la portion en forme de roue est supérieur à 0,8 et inférieur à 2, et la sonotrode présentant, lors d'une excitation par ultrasons, trois noeuds d'oscillation, chaque portion, qui, en direction longitudinale, s'étend d'un maximum d'oscillation à un autre et qui n'influence pas la fréquence propre de l'oscillation longitudinale pure, ne faisant pas partie de la sonotrode.

2. Sonotrode selon la revendication 1, **caractérisée en ce que** la sonotrode présente une symétrie de rotation.

3. Sonotrode selon l'une des revendications 1 à 2, **caractérisée en ce que** le rapport entre la longueur de la portion en forme de tige et le diamètre de la portion en forme de roue est inférieur à 1,5 et de préférence inférieur à 1,15.

4. Emetteur d'ultrasons constitué d'un convertisseur et d'une sonotrode selon l'une des revendications 1 à 3, reliée, le cas échéant, avec le convertisseur par l'intermédiaire d'un transformateur d'amplitude (2), **caractérisé en ce que** le convertisseur est conçu de façon à ce qu'un mode propre de la sonotrode peut être excité, dans lequel l'énergie d'oscillation se divise en oscillation longitudinale et en oscillation radiale, le rapport entre l'énergie absorbée dans l'oscillation radiale et l'énergie absorbée dans l'oscillation longitudinale étant de préférence entre 20:80 et 80:20 et de préférence entre 30:70 et 70:30, et au mieux entre 40:60 et 60:40.

5. Emetteur d'ultrasons constitué d'un convertisseur et d'une sonotrode (1) selon l'une des revendications 1 à 3, reliée, le cas échéant, avec le convertisseur, par l'intermédiaire d'un transformateur d'amplitude (2), l'émetteur d'ultrasons comprenant un support (3) pour la fixation de l'émetteur d'ultrasons à un bâti de machine, **caractérisé en ce que** le support (3) est fixé directement à la sonotrode (1) sans élément de découplage radial.

6. Emetteur d'ultrasons selon la revendication 5, **caractérisé en ce que** le support (3) est en outre fixé au transformateur d'amplitude (2) ou au convertisseur.

7. Emetteur d'ultrasons selon la revendication 6, **caractérisé en ce que** la sonotrode (1) ainsi que le transformateur d'amplitude (2) ou le convertisseur présentent une butée et que le support (3) comprend un manchon qui s'appuie aussi bien contre la butée de la sonotrode (1) que contre la butée du transformateur d'amplitude (2) ou contre le convertisseur.

8. Emetteur d'ultrasons selon la revendication 7, **caractérisé en ce qu'**au moins la butée de la sonotrode (1) présente une forme annulaire et est constituée de plusieurs éléments de butée disposés de manière annulaire sur la périphérie autour de la sonotrode.

9. Emetteur d'ultrasons selon l'une des revendications 5 à 8, **caractérisé en ce que** la sonotrode (1) est une sonotrode à rotation, deux supports (3) étant prévus, qui sont reliés avec la sonotrode (1) sur des côtés opposés de la sonotrode (1).

10. Emetteur d'ultrasons selon l'une des revendications 5 à 9, **caractérisé en ce que** le support (3) est relié de manière solidaire avec la sonotrode (1).

11. Emetteur d'ultrasons selon l'une des revendications 5 à 10, **caractérisé en ce qu'**un élément de transformation d'amplitude est prévu, le rapport B/b entre la largeur (B) de la surface réfléchissante (10) dans la direction longitudinale et la longueur (I) de l'élément de transformation d'amplitude dans la direction longitudinale étant inférieur à 1, de préférence inférieur à 0,8, de préférence inférieur à 0,55 et au mieux inférieur à 0,35.

12. Dispositif de soudure par ultrasons avec un bâti de machine auquel est fixé un émetteur d'ultrasons selon l'une des revendications 4 à 11 et un contre-outil.
